# EUROPÄISCHE PATENTSCHRIFT

(11) **EP 0 749 915 B1**
(45) Veröffentlichungstag und Bekanntmachung des Hinweises auf die Patenterteilung: **13.02.2002**
(21) Anmeldenummer: 96109149.3
(22) Anmeldetag: 07.06.1996
(51) Int. Cl.: B65G 1/04, B66F 9/14

(54) **Teleskopierbare Transporteinrichtung**
Telescopic transporting device
Dispositif de transport télescopique

(30) Priorität: 20.06.1995 DE 19522243
(43) Veröffentlichungstag der Anmeldung: 27.12.1996
(73) Patentinhaber: SHS Fördertechnik GmbH & Co. KG,, 64293 Darmstadt (DE)
(72) Erfinder: Proske, Hans, 64354 Reinheim (DE)
(74) Vertreter: Sievers, Uwe, Dipl.-Ing.

(56) Entgegenhaltungen:
- EP-A- 0 385 652
- EP-A- 0 647 575
- DE-A- 3 519 780
- DE-A- 4 205 856
- US-A- 5 207 555
- SOVIET PATENT ABSTRACTS Week 9135 16.Oktober 1991 Derwent Publications Ltd., London, GB; AN 91-258460 XP002015183 & SU-A-1 615 078 (POPOV V L) , 23.Dezember 1990

## Beschreibung

Die Erfindung betrifft eine teleskopierbare Transporteinrichtung nach dem Oberbegriff des Patentanspruchs 1. Eine derartige Transporteinrichtung ist aus der SU-A-1615078 bekannt. Bei der bekannten Transporteinrichtung sind Teleskopelemente, eine Antriebseinrichtung und Zugmittel vorgesehen. Die Antriebseinrichtung in Form eines Doppelkranz- Kettenrades ist ebenso wie ein nicht antreibendes Kettenrad mit nur einem Kranz in dem ersten Teleskopelement gelagert. Zwischen den beiden Kettenrädern ist die Kette doppelreihig ausgeführt, während die sich beiderseits anschließenden Kettenabschnitte einreihig ausgeführt und jeweils an entgegengesetzten Enden des anderen Teleskopelements befestigt sind.

Eine weitere Transporteinrichtung ist aus der EP 385 652 B1 bekannt und dient dem Transport von Gegenständen entlang der Teleskopierbahn. Bei der bekannten Vorrichtung wird der Schlitten mittels eines endlosen, zwischen zwei Umlenkrollen geführten Riemens, der an seinem Zugtrum einen Mitnehmer aufweist, verschoben. Diese Art von Teleskopschlitten ist lediglich in der Lage, insgesamt eine Verschiebung, die etwa dem Abstand der Umlenkrollen entspricht, durchzuführen.

Bei der aus der US-A-5 207 555 bekannten Transporteinrichtung ist eine endlose Kette, die zwischen Umlenkrollen geführt ist, vorgesehen, die an ihrem Zugtrum einen Mitnehmer aufweist, der mit einem Teleskopelement verbunden ist. Insgesamt ist auch hier ohne zusätzliche Teleskopelemente nur eine Verschiebung möglich, die in etwa dem Abstand der Umlenkrollen entspricht.

Mit den beiden letztgenannten Vorrichtungen können also ohne zusätzliche Teleskopelemente lediglich Verschiebewege in beiden Teleskopierrichtungen von jeweils etwa einer halben Länge des genannten Abstandes der Umlenkrollen oder eine Verschiebung in nur eine Richtung von etwa der gesamten genannten Länge durchgeführt werden.

Insbesondere bei der Beschickung von Hochregallagern, bei welchen ein sogenanntes Regalförderzeug zwischen zwei Regalreihen bewegt wird, ist es jedoch erforderlich, daß eine möglichst große Teleskopierbarkeit in beide Teleskopierrichtungen erreicht wird.

Zwar ist auch mit der teleskopierbaren Transporteinrichtung nach der SU-A-1615078 eine Teleskopierbarkeit in beide Richtungen um nahezu den Abstand der Umlenkrollen möglich, jedoch ist hierfür eine spezielle Ausgestaltung der als Kettenräder ausgebildeten Umlenkrollen ebenso erforderlich wie eine abschnittsweise unterschiedliche Ausgestaltung des Zugmittels.

Der Erfindung liegt daher die Aufgabe zugrunde, eine gattungsgemäße Transporteinrichtung zu schaffen, die bei einfachem Aufbau nach zwei Seiten jeweils um annähernd die gesamte Abstandslänge zwischen den Umlenkrollen des Zugmittels verschiebbar ist.

Diese Aufgabe wird erfindungsgemäß durch die kennzeichnenden Merkmale des Anspruches 1 gelöst.

Zwar ist aus der DE-PS 35 19 780 ein Teleskoptisch bekannt, mit dem eine derart große Ausfahrweite erreicht werden kann, jedoch ist hierzu mindestens ein Zwischentisch notwendig, so daß sich der Aufbau sehr kompliziert gestaltet und sich die Bauhöhe deutlich vergrößert.

Durch die erfindungsgemäße Lösung lassen sich dagegen große Ausfahrweiten bei einfachem mechanischem Aufbau und sehr geringer Bauhöhe verwirklichen.

Oftmals ist es zum Einlagern von Gegenständen nötig, daß die teleskopierbare Transporteinrichtung auch noch eine Hub-, Greif-, Förder- und/oder Haltefunktion ausführt, so daß in einer vorteilhaften Weiterbildung der Erfindung vorgesehen ist, daß das erste Teleskopelement mindestens einen zweiten Antrieb enthält, der mindestens ein zweites Zugmittel antreibt, wobei das zweite Zugmittel um in den beiden Endbereichen des ersten Teleskopelementes angeordnete Umlenkrollen geführt ist, von wo aus die beiden Enden des Zugmittels über die jeweils gegenüberliegenden Endbereiche des zweiten Teleskopelementes zu mindestens einer Betätigungseinrichtung eines auf dem zweiten Teleskopelementes angeordneten Arbeitsmittels geführt sind.

Da der Antrieb oder die Antriebe komplett in dem ersten Teleskopelement untergebracht werden können, ist es von Vorteil, wenn das erste Teleskopelement als Basiselement und das zweite Teleskopelement als verschiebbarer Schlitten ausgeführt ist. Hierdurch lassen sich komplizierte, aufwendig zu führende und störanfällige Kabelverbindungen oder Stromschienen vermeiden.

Weitere vorteilhafte Merkmale ergeben sich aus den übrigen Unteransprüchen sowie aus der nachstehenden Beschreibung eines Ausführungsbeispiels der Erfindung und ihrer Funktion anhand der Zeichnung.

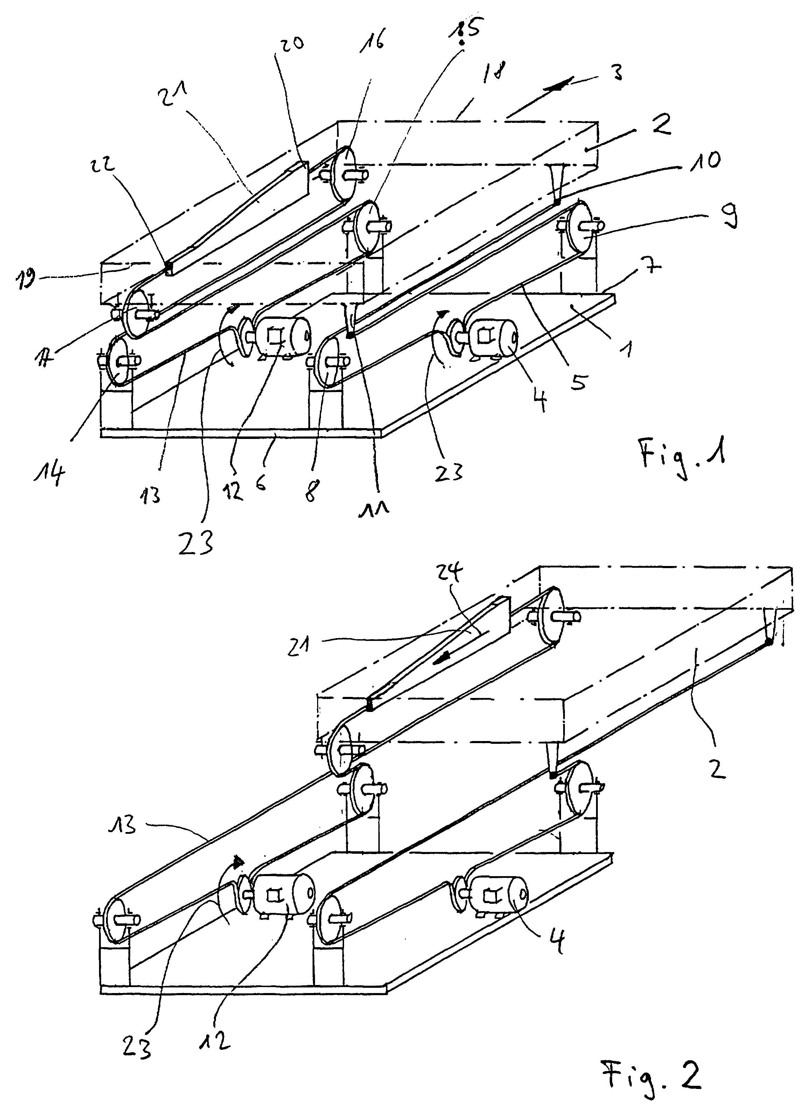

Hierzu zeigt Figur 1 in perspektivischer Darstellung eine erfindungsgemäße Transporteinrichtung in der Ausgangsstellung und Figur 2 stellt den ausgefahrenen Zustand des Schlittens dar.

Gemäß Figur 1 besteht die Transporteinrichtung aus einem Grundträger 1, auf dem mittels nicht dargestellter Lagermittel ein Schlitten 2 längs verschiebbar, d. h. parallel zum Pfeil 3, gelagert ist. Am Grundträger 1 ist ein erster Antriebsmotor 4 befestigt, durch den ein erstes Zugmittel 5, welches als Kette, Seil oder Riemen ausgebildet ist, angetrieben werden kann. Das erste Zugmittel 5 führt parallel zur Verschiebebahn laufend zu den an den jeweils gegenüberliegenden Stirnseiten 6 bzw. 7 des Grundträgers 1 drehbar angebrachten Umlenkrollen 8 bzw. 9. Das Zugmittel 5 umschlingt diese Umlenkrollen 8,9 und führt jeweils zu einem Mitnehmer 10 bzw. 11, die an jeweils gegenüberliegenden Stirnseiten 18,19 des Schlittens 2 vorgesehen sind.

Gemäß der in Figur 1 dargestellten Ausgangsposition befindet sich der Mitnehmer 10, an welchem das Zugmittel von der Umlenkrolle 8 kommend befestigt ist in etwa oberhalb der Umlenkrolle 9. Der Mitnehmer 11, an welchem das Zugmittel von der Umlenkrolle 9 kommend befestigt ist, liegt etwa oberhalb der Umlenkrolle 8. Die Umlenkrollen 8 und 9 sowie die Mitnehmer 11 bzw. 10 sind entlang der Stirnseiten 6,7 bzw. 18,19 so ausgerichtet, daß sie sich bei einer Bewegung nicht gegenseitig behindern, d. h. die Umlenkrolle 8 und der Mitnehmer 10 sind etwas weiter entlang der jeweiligen Stirnseiten nach innen verschoben, als die Umlenkrolle 9 und der zugeordnete Mitnehmer 11.

Zur Betätigung eines auf dem Schlitten 2 angeordneten Arbeitsmittels ist auf dem Grundträger 1 ein zweiter Antriebsmotor befestigt, der dem Antrieb eines parallel zum ersten Zugmittel 5 geführten zweiten Zugmittels 13 dient. Vom zweiten Antriebsmotor 12 kommend führt das zweite Zugmittel 13 einerseits zu der auf Höhe der Stirnseite 6 auf dem Grundträger 1 befestigten Umlenkrolle 14, die es umschlingt. Von dort aus führt es etwa parallel zum Grundträger 1 verlaufend zur Umlenkrolle 16, die etwa auf Höhe der Stirnseite 18 des Schlittens 2 drehbar mit dem Schlitten 2 verbunden ist. Nach Umschlingung der Umlenkrolle 16 um etwa 180° führt das zweite Zugmittel 13 zu dem Ende 20 des Betätigungsmittels 21, an welchem es befestigt ist.

Das zweite Zugmittel 13 führt andererseits vom zweiten Antriebsmotor 12 aus zu einer Umlenkrolle 15, die etwa auf Höhe der Stirnseite 7 des Grundträgers 1 drehbar befestigt ist. Nach dem diese Umlenkrolle 15 um etwa 180° umschlungen ist, führt das zweite Zugmittel 13 zu einer weiteren Umlenkrolle 17, die etwa auf Höhe der Stirnseite 19 des Schlittens 2 drehbar befestigt ist. Auch die Umlenkrolle 17 wird um etwa 180° umschlungen und das zweite Ende des zweiten Zugmittels 13 ist an dem dem Ende 20 des Betätigungsmittels 21 gegenüberliegenden Ende 22 befestigt.

In der Ausgangsstellung gemäß Figur 1 liegt die Umlenkrolle 17 in etwa über der Umlenkrolle 14 und die Umlenkrolle 16 befindet sich in dieser Position etwa über der Umlenkrolle 15. Auch für die Führung des zweiten Zugmittels 13 sind die Umlenkrollen 14 bis 17 entlang der jeweiligen Stirnseiten 6,7,18,19 seitlich derart gegeneinander versetzt, daß eine Längsverschiebung zwischen Grundträger 1 und Schlitten 2 in beide Richtungen unbehindert stattfinden kann.

Wird nun von der in Figur 1 dargestellten Position ausgehend der erste Antriebsmotor 4 in der durch den Pfeil 23 angedeuteten Drehrichtung betätigt, so zieht das erste Zugmittel 5 am Mitnehmer 11 und verschiebt den Schlitten 2 in die durch den Pfeil 3 angedeutete Richtung. Synchron mit dem ersten Antriebsmotor 4 wird der zweite Antriebsmotor 12 mit gleicher Geschwindigkeit und mit gleichem Drehsinn betätigt. Dadurch wird sichergestellt, daß während des teleskopierens des Schlittens 2 keine Verschiebung des Betätigungsmittels 21 stattfindet, da durch das Mitdrehen des zweiten Antriebsmotors 12 die am zweiten Zugmittel 13 auftretende Verschiebung kompensiert wird. Es ist jedoch auch möglich, je nachdem, welche Trägheitsmoment- oder Reibungsverhältnisse vorliegen, den zweiten Antriebsmotor 12 stromlos mitdrehen zu lassen oder im Falle der Teleskopierbewegung einen Leerlauf einzuschalten.

Hat der Schlitten 2 nun seine in Figur 2 dargestellte Endstellung erreicht, so kann bei arretiertem ersten Antriebsmotor 1 der zweite Antriebsmotor 12 in Drehrichtung 23 betrieben werden, wodurch das zweite Zugmittel 13 eine Zugkraft in Richtung des Pfeiles 24 am Betätigungsmittel 21 bewirkt. Durch die keilförmige Ausbildung des Betätigungsmittels 21 kann beispielsweise eine Hubvorrichtung zum Anheben von Gegenständen oder Paletten beaufschlagt werden. Somit lassen sich auch auf besonders einfache Weise Gegenstände oder Paletten in Regalen einlagern.

Durch Umkehrung der beschriebenen Betriebsweise läßt sich der Schlitten 2 wieder in die Ausgangslage zurückfahren, eine Verschiebung aus der Ausgangslage heraus in eine dem Pfeil 3 entgegengesetzte Richtung ist auf entsprechende Weise natürlich ebenfalls möglich, wodurch sich mit der beschriebenen Transporteinrichtung auf besonders günstige Weise von einem Regalförderzeug, welches dann in Querrichtung des Grundträgers 1 zwischen zwei Regalen verfahrbar ist, Einlagerungen von Gegenständen oder Paletten vornehmen lassen.

Es versteht sich, daß durch den zweiten Antriebsmotor 12 auch weitere Arbeitsmittel, wie Halte-, Greifvorrichtungen oder dergleichen betätigt werden können. Auch ist es möglich, weitere Antriebsmotoren und Zugmittel in dieser Weise vorzusehen, die weitere Arbeitsmittel betätigen können.

Auch kann statt mehrerer Antriebsmotoren ein einziger Motor verwendet werden, durch den mittels entsprechender Getriebe und/oder schaltbarer Kupplungen mehrere Zugmittel antreibbar sind.

## Patentansprüche

1. Teleskopierbare Transporteinrichtung mit einem ersten und einem zweiten Teleskopelement, die jeweils in Teleskopierrichtung verschiebbar aufeinander gelagert sind, einer Antriebseinrichtung (4), die im ersten Teleskopelement angeordnet ist, einem Zugmittel (5) und Umlenkrollen (8,9) für das Zugmittel (5), die jeweils in den Endbereichen des ersten Teleskopelementes angebracht sind, wobei die beiden Enden des Zugmittels (5) jeweils an dem der zugeordneten Umlenkrolle (8,9) gegenüberliegenden Endbereich des zweiten Teleskopelementes (2) an als Mitnehmer (10, 11) ausgebildeten Befestigungsstellen befestigt sind und die Mitnehmer (10, 11) zueinander versetzt angeordet sind, **dadurch gekennzeichnet, daß** bei beiden Umlenkrollen (8,9) nur eine Laufspur für das Zugmittel (5) vorgesehen ist und die Umlenkrollen (8, 9) zueinander versetzt angeordnet sind, wobei die Bewegungsbahnen der über die Umlenkrollen (8, 9) abrollenden Zugmittelabschnitte sich nicht überschneiden.

2. Transporteinrichtung nach Anspruch 1, **dadurch gekennzeichnet, daß** das erste Teleskopelement (1) mindestens einen zweiten Antrieb (12) enthält, der mindestens ein zweites Zugmittel (13) antreibt, wobei das zweite Zugmittel (13) um in den beiden Endbereichen des ersten Teleskopelementes (1) angeordnete Umlenkrollen (14,15) geführt ist, von wo aus die beiden Enden des Zugmittels über die jeweils gegenüberliegenden Endbereiche des zweiten Teleskopelementes (2) zu mindestens einer Betätigungseinrichtung (21) eines auf dem zweiten Teleskopelementes (2) angeordneten Arbeitsmittels geführt sind.

3. Transporteinrichtung nach Anspruch 2, **dadurch gekennzeichnet, daß** als Arbeitsmittel eine Hubeinrichtung vorgesehen ist.

4. Transporteinrichtung nach Anspruch 2, **dadurch gekennzeichnet, daß** als Arbeitsmittel eine Greifeinrichtung vorgesehen ist.

5. Transporteinrichtung nach einem der vorhergehenden Ansprüche, **dadurch gekennzeichnet, daß** das erste Teleskopelement als Grundträger (1) und das zweite Teleskopelement als verschiebbarer Schlitten (2) ausgeführt ist.

6. Transporteinrichtung nach einem der vorhergehenden Ansprüche, **dadurch gekennzeichnet, daß** als Zugmittel eine Kette eingesetzt ist.

7. Transporteinrichtung nach einem der Ansprüche 1 bis 5, **dadurch gekennzeichnet, daß** als Zugmittel ein Seil eingesetzt ist.

8. Transporteinrichtung nach einem der Ansprüche 1 bis 5, **dadurch gekennzeichnet, daß** als Zugmittel ein Riemenantrieb eingesetzt ist.

9. Transporteinrichtung nach einem der vorhergehenden Ansprüche, **dadurch gekennzeichnet, daß** das erste Teleskopelement (1) mit einem verfahrbaren Regalförderzeug eines Regallagers verbunden ist.

## Claims

1. Telescopic transporting device with a first and a second telescope element, which are disposed one on the other to be respectively displaceable in telescoping direction, with a drive means (4) which is disposed in the first telescope element, a pulling means (5) and deflection rollers (8, 9) for the pulling means (5), which are respectively attached in the end regions of the first telescope element, wherein the two ends of the pulling means (5) are respectively fastened at the end region of the second telescope element (2) located opposite the associated deflection roller (8, 9) at fastening points constructed as entrainment means (10, 11) and the entrainment means (10, 11) are offset in relation to one another, **characterised in that** in the case of the two deflection rollers (8, 9), only one running track is provided for the pulling means (5) and the deflection rollers (8, 9) are offset in relation to one another, whereby the paths of movement of the pulling means sections running over the deflection rollers (8, 9) do not intersect.

2. Transporting device according to Claim 1, **characterised in that** the first telescope element (1) contains at least one second drive (12), which drives at least one second pulling means (13), wherein the second pulling means (13) is guided around deflection rollers (14, 15) disposed in the two end regions of the first telescope element (1), and from there the two ends of the pulling means are guided over the respectively opposite end regions of the second telescope element (2) to at least one operating means (21) of a working means disposed on the second telescope element (2).

3. Transporting device according to Claim 2, **characterised in that** a hoisting means is provided as working means.

4. Transporting device according to Claim 2, **characterised in that** a gripping means is provided as working means.

5. Transporting device according to one of the preceding claims, **characterised in that** the first telescope element is constructed as base support (1) and the second telescope element is constructed as displaceable carriage (2).

6. Transporting device according to one of the preceding claims, **characterised in that** a chain is used as pulling means.

7. Transporting device according to one of Claims 1 to 5, **characterised in that** a rope is used as pulling means.

8. Transporting device according to one of Claims 1 to 5, **characterised in that** a belt drive is used as pulling means.

9. Transporting device according to one of the preceding claims, **characterised in that** the first telescope element (1) is connected to a movable shelf conveyor mechanism of a shelved storage area.

## Revendications

1. Dispositif de transport télescopique comprenant des premier et deuxième éléments télescopiques qui sont chacun agencés l'un au-dessus de l'autre de manière mobile dans la direction télescopique, un dispositif d'entraînement (4) qui est agencé dans le premier élément télescopique, un mécanisme de traction (5) et des poulies de guidage (8,9) pour le mécanisme de traction (5) qui sont chacune disposées aux extrémités du premier élément télescopique, les deux extrémités du mécanisme de traction (5) étant chacune fixées à l'extrémité du deuxième élément télescopique (2) opposée à la poulie de guidage (8, 9) correspondante à des endroits de fixation réalisés sous la forme d'entraîneurs (10, 11), les entraîneurs (10, 11) étant désaxés l'un vis-à-vis de l'autre, **caractérisé en ce que**, pour les deux poulies de guidage (8, 9), une seule voie de déplacement est prévue pour le mécanisme de traction (5) et **en ce que** les poulies de guidage (8, 9) sont agencées de manière désaxée entre elles, les trajectoires de mouvement des parties du mécanisme de traction roulant par-dessus les poulies de guidage (8, 9) ne se chevauchant pas.

2. Dispositif de transport selon la revendication 1, **caractérisé en ce que** le premier élément télescopique (1) comprend au moins un deuxième entraînement (12), qui entraîne au moins un deuxième mécanisme de traction (13), le deuxième mécanisme de traction (13) étant amené autour de poulies de guidage (14, 15) agencées aux deux extrémités du premier élément télescopique (1), à partir d'où les deux extrémités du mécanisme de traction sont amenées par-dessus les extrémités opposées l'une à l'autre du deuxième élément télescopique (2) jusqu'à au moins un dispositif de commande (21) d'un mécanisme actif disposé sur le deuxième élément télescopique (2).

3. Dispositif de transport selon la revendication 2, **caractérisé en ce qu'**un dispositif de levage est prévu en tant que mécanisme actif.

4. Dispositif de transport selon la revendication 2, **caractérisé en ce qu'**un dispositif de saisie est prévu en tant que mécanisme actif.

5. Dispositif de transport selon l'une des revendications précédentes, **caractérisé en ce que** le premier élément télescopique est réalisé sous la forme d'un support de base (1) et le deuxième élément télescopique sous la forme d'un chariot mobile (2).

6. Dispositif de transport selon l'une des revendications précédentes, **caractérisé en ce qu'**une chaîne est utilisée comme mécanisme de traction.

7. Dispositif de transport selon l'une des revendications 1 à 5, **caractérisé en ce qu'**un câble est utilisé comme mécanisme de traction.

8. Dispositif de transport selon l'une des revendications 1 à 5, **caractérisé en ce qu'**une commande à courroie est utilisée comme mécanisme de traction.

9. Dispositif de transport selon l'une des revendications précédentes, **caractérisé en ce que** le premier élément télescopique (1) est couplé à un transélévateur déplaçable d'un palier à rayonnage.
